# EUROPEAN PATENT SPECIFICATION

(11) **EP 3 894 869 B1**
(45) Date of publication and mention of the grant of the patent: **24.08.2022**
(21) Application number: 19817274.4
(22) Date of filing: 06.12.2019
(51) Int. Cl.: G01N 35/00, B01L 3/00, G01N 35/04, B01L 9/06, B25J 15/00

(54) **A TEST TUBE MANIPULATION SYSTEM**
PRÜFRÖHRCHENMANIPULATIONSVORRICHTUNG
SYSTÈME DE MANIPULATION DE TUBE À ESSAI

(30) Priority: 14.12.2018 IE S20180573
(43) Date of publication of application: 20.10.2021
(73) Proprietor: Project Management Limited, Dublin 24 (IE)
(72) Inventor: WOLTON, David, Wicklow (IE)
(74) Representative: FRKelly
(86) International application number: PCT/EP2019/084096
(87) International publication number: WO 2020/120343

(56) References cited:
- DE-U1- 29 518 548
- JP-A- 2001 246 267
- US-A1- 2008 035 642
- US-A1- 2017 152 130
- US-B1- 6 216 340
- US-B1- 6 293 750

## Description

### Field of the invention

This invention relates to a test tube manipulation system, and in particular a system for use in handling test tubes and centrifuge tubes, which enables automation for improved reliability and repeatability, while also providing accurate and dextrous handling of the test tubes.

### Background of the invention

Test tubes and centrifuge tubes are common items of equipment in many laboratory and related environments, and have many different uses. Centrifuge tubes are generally utilised to separate and/or purify mixtures of solids and liquids, in particular particles suspended in a liquid, using centrifugal forces to effect the separation. This is normally achieved by placing the centrifuge tubes in a centrifuge which include a rotor into which an array of the tubes can be retained, and the rotor is thus spun at high speed in order to generate the centrifugal force necessary to separate the suspended particles, which are forced to the bottom of the tube, allowing the liquid and solid constituents to be separately extracted from the tube.

The environments in which such equipment is used often requires a high level of sterility, and in addition the tasks or workflows generally involve a high level of repeatability while requiring accuracy and reliability, all of which make such operations extremely suited to automation. However the equipment involved, in particular the centrifuge tubes, are relatively small and awkward to manipulate, the task of removing and replaced the threaded on lids being a particularly difficult task to accomplish reliably using automated systems.

It is therefore an object of the present invention to provide a test tube manipulation system which addresses the above mentioned problems. Test tube manipulation systems known from the prior art are disclosed in JP 2001 246267 A and DE 295 18 548 U1.

### Summary of the invention

According to a first aspect of the present invention there is provided a test tube manipulation system comprising a test tube provided with at least a pair of protrusions or recesses spaced from one another about a sidewall of the test tube; and a gripper comprising a pair of fingers each of which defines a protrusion or a recess shaped and dimensioned to receive one of the protrusions or recesses on the test tube.

Preferably, the test tube comprises the pair of protrusions and the gripper comprises the pair of recesses.

Preferably, the protrusions are diametrically spaced from one another.

Preferably, the protrusions are elongate and extend in a major direction longitudinally of the test tube and in a minor direction circumferentially of the test tube.

Preferably, the recess in each gripper is shaped and dimensioned to closely conform to the exterior shape of the protrusion in at least one of the major and/or minor directions.

Preferably, the test tube comprises a closure releasably securable about a mouth of the test tube.

Preferably, the closure is threadably securable about the mouth of the test tube.

Preferably, the closure is provided with a second pair of the protrusions spaced from one another.

Preferably, the test tube comprises a third pair of the protrusions spaced from one another on the sidewall and longitudinally spaced from the first pair of the protrusions.

Preferably, manipulation system comprises a dock for receiving and retaining the test tube.

Preferably, the dock comprises a body defining a well adapted to permit the partial longitudinal insertion of the test tube while resisting rotational displacement of the test tube relative to the dock.

Preferably, the well comprises a pair of diametrically opposed and radially outwardly extending slots shaped and dimensioned to receive the pair of protrusions.

Preferably, the manipulation system comprises a robotic arm by which the gripper is actuatable.

As used herein, the term "test tube" is intended to mean a substantially cylindrical vessel, preferably formed from plastic or glass, and having a closed and preferably tapered or rounded lower end and on open upper end defining a mouth of the test tube, and optionally further comprising a releasable closure or lid securable about the mouth to seal the interior of the test tube. The term "test tube" or "tube" should also be understood to cover centrifuge tubes, cyro-vials, cylindrical bottles and similar vessels.

As used herein, the term "side wall" is intended to mean a portion of a wall forming the test tube and located either between a closed lower end and an open upper end or mouth of the test tube, and optionally including a portion of a wall of an optional closure member or lid releasably securable about the mouth of the test tube.

As used herein, the term "threadably" is intended to mean that a closure or lid is engageable with a mouth or open end of a container such as a test tube or the like via a relative rotational displacement between the closure and container from an initial state of contact to a fully engaged state, and which rotational displacement may extend through one or more full rotations as would generally be the case with a threaded closure, or a partial rotation as for example would be the case with a so called "bayonet" type closure or the like.

### Brief description of the drawings

The present invention will now be described with reference to the accompanying drawings, in which:

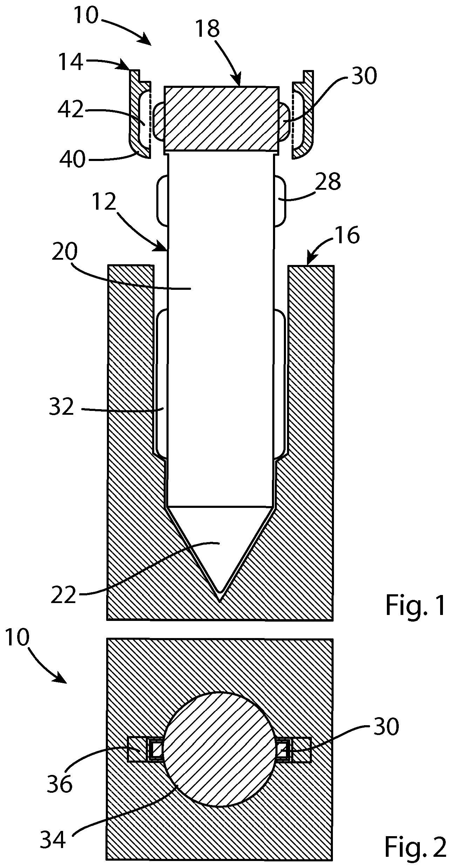

Figure 1 illustrates a schematic representation in elevation of a test tube manipulation system according to a preferred embodiment of the present invention;
Figure 2 illustrates a plan of the schematic representation shown in Figure 1;

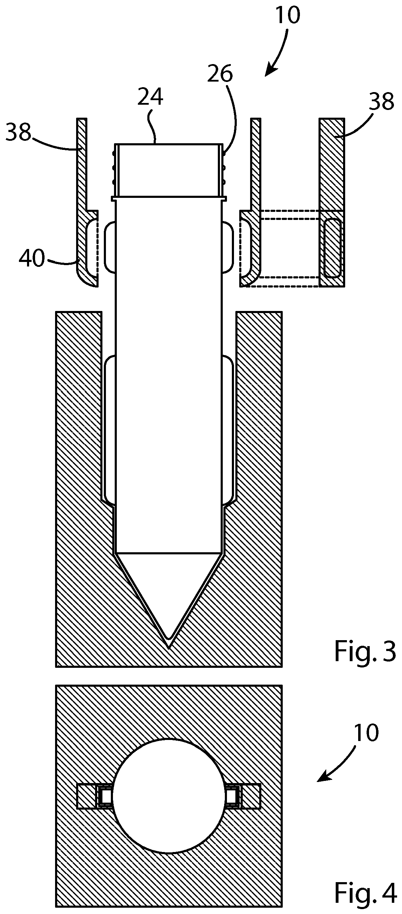

Figure 3 illustrates a schematic representation of the test tube manipulation system shown in Figure 1 and having a closure or cap removed from a test tube forming part of the system; and
Figure 4 illustrates a plan view of the schematic representation shown in Figure 3.

### Detailed description of the drawings

Referring now to the accompanying drawings there is illustrates a test tube manipulation system, generally indicated as 10, for particular use in the automated and reliable removal and replacement of lids on test tubes or the like, in addition to the automated and reliable movement of such test tubes, with and without a lid thereon, sometimes referred to as "pick and place" handling of such items. This type of automation is particularly applicable to laboratory or similar environments where the sterility of a robotic arm over a human operator is preferable, as is the accuracy, reliability and repeatability of the actions of a robotic arm or manipulator over a human being.

The manipulation system comprises at least one modified test tube 12, and in most embodiments an array of such test tubes 12, in addition to a gripper 14 operable, as described in detail hereinafter, to engage with and manipulate the test tube 12. The gripper 14 is preferably provided at the extremity of a robotic arm (not shown) or functional equivalent and which is operable to displace the gripper 14 through any required range of motion to perform the necessary tasks of manipulating and moving the test tube 12, for example from one station to another, or from a station to a centrifuge, and from the centrifuge to a further station. The test tube 12 has a novel design which will be described in detail hereinafter, which in combination with the gripper 14 allows for improved and reliable manipulation of the test tube 12.

The system 10 may optionally comprise one or more docks 16 for receiving and retaining one of the test tubes 12 therein, effectively defining a station at which the test tube 12 may be deposited before, during or after a task is to be performed, and which effectively immobilises the test tube 12 to allow a closure or lid 18 to be removed from or secured to the test tube 14 as described in greater detail hereinafter.

The test tube or centrifuge tube 12 comprises a cylindrical sidewall 20 which terminates in a closed end 22 which may be conical or dome shaped, or any other suitable alternative. The opposite end of the test tube 12 is open and defined by a mouth 24, the region of the sidewall 20 directly below the mouth 24 defining a thread 26 for releasably receiving the lid 18 which can be used to temporarily seal the test tube 12, in particular when the test tube 12 is a centrifuge tube and is required to be spun at high speed while retaining contents therein. The test tube 12 may be formed from any suitable material or combination of materials, the most likely being glass or plastic, and may include markings such as graduations or the like on the sidewall 20 for the purposes of dosing, etc.

Provided on the sidewall 20, below the mouth 24, are a pair of diametrically opposed protrusions in the form of longitudinally extending first lugs 28, which are preferably but not essentially formed integrally with the sidewall 20. In the preferred embodiment illustrated each lug 28 has a major dimension which extends longitudinally of the test tube 12, and a minor dimension which extends circumferentially of the test tube 12, such that the lug 28 is elongate in the longitudinal direction. The lug 28 also includes rounded upper and lower edges which thus avoid the creation of sharp edges or surfaces which could result in injury or damage to related equipment. It will however be appreciated from the following description that there are many other suitable shapes and configurations for the lugs 28 which would provide the requisite functionality.

The lid 18 is also modified to include a diametrically opposed pair of second lugs 30 which again extend in a major direction longitudinally and in a minor direction circumferentially of the test tube 12. The second lugs 30 may be shorter in the longitudinal direction than the first lugs 28, but preferably have the same minor dimension, for the reasons set out hereinafter.

The test tube 12 may optionally be provided with a pair of diametrically disposed third lugs 32 provided on the sidewall 20 at a position intermediate the closed end 22 and the first lugs 28, which in use can therefore be described as being below the first lugs 28. The third lugs 32 again extend in a major dimension longitudinally of the test tube 12 and a minor direction circumferentially of the test tube 12. In the embodiment illustrated the third lugs 32 are significantly greater in length in the longitudinal direction relative to the first lugs 28, although it will be appreciated that the dimensions thereof may be varied once the functionality of the third lugs 32 is maintained.

In order to receive and retain one of the test tubes 12 the dock 16 defines a well 34 which is substantially cylindrical in shape and closely conforms to the exterior shape and size of the test tube 12, which can therefore be inserted into the well 34 such that the closed end 22 contacts the bottom of the well 34, the dock 16 then acts as a stand for holding the test tube 12 and allowing the upper end and mouth 22 to be accessible. In order to prevent rotation of the test tube 12 relative to the dock 16 the well 34 additionally includes a pair of keyways or slots 36 which are diametrically disposed and extend radially outwardly from the well 34, the slots 36 extending downwardly from the open upper end of the well 34, and are slightly greater in width than the minor dimension of the third lugs 32. In this way a test tube 12 can be partially seated in the well 34, with the pair of third lugs 32 are located within the pair of slots 36 in order to prevent rotation of the test tube 12 relative to the dock 16. As illustrated the relative depth of the well 34 and location of the first lugs 28 is such that when the test tube 12 is retained in the dock 16 the first lugs 28 are fully exposed above the dock 16 and therefore accessible by the gripper 14.

In the preferred embodiment illustrated the gripper 14 comprises a pair of fingers 38 which are displaceable relative to one another in order to allow the test tube 12 to be gripped between the pair of fingers 38. Each finger 38 terminates in a tip 40 which defines a recess 42 extending inwardly from an inner face thereof. Each recess 42 is shaped and dimensioned to correspond to the shape and dimensions of the larger of the first lugs 28 and second lugs 30. As mentioned above, both the first lugs 28 and second lugs 30 preferably have the same minor dimension, and the recess 42 preferably has the same minor dimension in order to closely conform to the lugs 28, 30. The major dimension of the recess 42 will accommodate both the larger first lugs 28 and the smaller second lugs 30.

Turning then to the operation of the manipulation system 10, the gripper 14 may be utilised to pick up the test tube 12 with the lid 18 secured thereon, and so using the second lugs 30, or with the lid 18 removed and using the first lugs 28. In addition, with the test tube 12 seated and immobilised in the dock 16, the gripper 14 can be used to both remove and replace the lid 16 by engaging the pair of second lugs 30 and rotating the gripper 14 about a longitudinal axis of the test tube 12 in order to thread the lid 16 on or off.

The gripper 14 and associated robotic arm or alternative actuator (not shown) can also be used to move the test tube 14, with or without the lid 18 thereon, in order to transfer the test tube 12 between stations (not shown) or into and out of a centrifuge (not shown) or the like. The provision of the first lugs 28 and second lugs 30 allow the test tube 12 to be securely gripped and retained by the gripper 14 without requiring a significant clamping force to be applied, as the lugs 28/30, when fully encapsulated by the recess 42 in each tip 40, ensure that the test tube 12 can not slip or be dislodged from between the fingers 38 of the gripper 14. The combination of the lugs 28/30 and the recesses 42 thus provide rotational isolation and vertical support to the test tube 12 when held by the gripper 14. This allows the test tubes 12 to be reliably manipulated and displaced as required, and thus a robotic arm (not shown) incorporating the gripper 14 can be used for tasks that previously required the dexterity of a human operator, allowing such tasks to be automated and thus performed on a continuous basis if required, for prolonged periods that would not be possible when using a human operator, and under sterile conditions and/or environmental conditions that would not normally be suited to a human operator.

While a pair of the lugs 28/30 is disclosed it is conceivable, although less desirable, that the system 10 could be operated with only a single lug 28/30 or more than two lugs 28/30 provided on each of the test tubes 12, with suitable modifications to the gripper 14. For example three equally circumferentially spaced lugs could be utilised on the sidewall 20 and lid 18, with the gripper 14 then being modified to include three fingers for gripping the three lugs. Less desirable would be the provision of a single lug, with the gripper 14 including a pair of fingers, only one having a tip with a recess to receive the single lug, the other finger having a more conventional curved surface for clamping directly against the sidewall or lid of the test tube. Multiple sets of lugs could also be providing, at longitudinal intervals along the sidewall, allowing the test tube to then be held at various heights should such functionality be required for a particular set of tasks to be performed.

It will therefore be appreciated that by providing a relatively simple modification to the test tube 12, to include the first lugs 28 on the sidewall 20 and the second lugs 30 on the lid 18, the task of screwing on and off the lid 18, normally difficult to achieve using robotics, is made relatively straightforward while at the same time allowing the secure displacement of the test tubes without requiring potentially damaging clamping forces to a relatively delicate item.

## Claims

1. A test tube manipulation system comprising a test tube provided with at least a pair of protrusions or recesses spaced from one another about a sidewall of the test tube; and a gripper comprising a pair of fingers each of which defines a protrusion or a recess shaped and dimensioned to receive one of the protrusions or recesses on the test tube.

2. A test tube manipulation system according to claim one in which the test tube comprises the pair of protrusions and the gripper comprises the pair of recesses.

3. The test tube manipulation system of claim 1 or 2 wherein the protrusions are diametrically spaced from one another.

4. The test tube manipulation system of any preceding claim wherein the protrusions are elongate and extend in a major direction longitudinally of the test tube and in a minor direction circumferentially of the test tube.

5. The test tube manipulation system of any preceding claim wherein the recess in each gripper is shaped and dimensioned to closely conform to the exterior shape of the protrusion in at least one of the major and/or minor directions.

6. The test tube manipulation system of any preceding claim wherein the test tube comprises a closure releasably securable about a mouth of the test tube.

7. The test tube manipulation system of claim 6 wherein the closure is threadably securable about the mouth of the test tube.

8. The test tube manipulation system of claim 6 or 7wherein the closure is provided with a second pair of the protrusions spaced from one another.

9. The test tube manipulation system of claim 8 wherein the test tube comprises a third pair of the protrusions spaced from one another on the sidewall and longitudinally spaced from the first pair of the protrusions.

10. The test tube manipulation system of any preceding claim wherein manipulation system comprises a dock for receiving and retaining the test tube.

11. The test tube manipulation system of claim 10 wherein the dock comprises a body defining a well adapted to permit the partial longitudinal insertion of the test tube while resisting rotational displacement of the test tube relative to the dock.

12. The test tube manipulation system of claim 11 wherein the well comprises a pair of diametrically opposed and radially outwardly extending slots shaped and dimensioned to receive the pair of protrusions.

13. The test tube manipulation system of any preceding claim wherein the manipulation system comprises a robotic arm by which the gripper is actuatable.

## Patentansprüche

1. Prüfröhrchenmanipulationssystem, umfassend ein Prüfröhrchen, das mit mindestens einem Paar Vorsprünge oder Vertiefungen versehen ist, die voneinander um eine Seitenwand des Prüfröhrchens herum beabstandet sind; und einen Greifer, der ein Paar Finger umfasst, von denen jeder einen Vorsprung oder eine Vertiefung definiert, die so geformt und bemessen ist, dass sie einen der Vorsprünge oder Vertiefungen an dem Prüfröhrchen aufnimmt.

2. Prüfröhrchenmanipulationssystem nach Anspruch 1, bei dem das Prüfröhrchen das Paar Vorsprünge und der Greifer das Paar Vertiefungen umfasst.

3. Prüfröhrchenmanipulationssystem nach Anspruch 1 oder 2, wobei die Vorsprünge diametral voneinander beabstandet sind.

4. Prüfröhrchenmanipulationssystem nach einem vorhergehenden Anspruch, wobei die Vorsprünge länglich sind und sich in einer Hauptrichtung in Längsrichtung des Prüfröhrchens und in einer Nebenrichtung in Umfangsrichtung des Prüfröhrchens erstrecken.

5. Prüfröhrchenmanipulationssystem nach einem vorhergehenden Anspruch, wobei die Vertiefung in jedem Greifer so geformt und bemessen ist, dass sie sich eng an die äußere Form des Vorsprungs in mindestens einer von der Haupt- und/oder der Nebenrichtung anpasst.

6. Prüfröhrchenmanipulationssystem nach einem vorhergehenden Anspruch, wobei das Prüfröhrchen einen Verschluss umfasst, der lösbar um eine Öffnung des Prüfröhrchens befestigbar ist.

7. Prüfröhrchenmanipulationssystem nach Anspruch 6, wobei der Verschluss schraubbar um die Öffnung des Prüfröhrchens befestigbar ist.

8. Prüfröhrchenmanipulationssystem nach Anspruch 6 oder 7, wobei der Verschluss mit einem zweiten Paar Vorsprünge versehen ist, die voneinander beabstandet sind.

9. Prüfröhrchenmanipulationssystem nach Anspruch 8, wobei das Prüfröhrchen ein drittes Paar Vorsprünge umfasst, die an der Seitenwand voneinander beabstandet sind und in Längsrichtung von dem ersten Paar Vorsprünge beabstandet sind.

10. Prüfröhrchenmanipulationssystem nach einem vorhergehenden Anspruch, wobei das Manipulationssystem ein Dock zum Aufnehmen und Halten des Prüfröhrchens umfasst.

11. Prüfröhrchenmanipulationssystem nach Anspruch 10, wobei das Dock einen Körper umfasst, der einen Schacht definiert, der angepasst ist, um das teilweise Längseinführen des Prüfröhrchens zu ermöglichen, während es einer Drehverschiebung des Prüfröhrchens relativ zu dem Dock widersteht.

12. Prüfröhrchenmanipulationssystem nach Anspruch 11, wobei der Schacht ein Paar von diametral gegenüberliegenden und sich radial nach außen erstreckenden Schlitzen umfasst, die so geformt und dimensioniert sind, dass sie das Paar Vorsprünge aufnehmen.

13. Prüfröhrchenmanipulationssystem nach einem vorhergehenden Anspruch, wobei das Manipulationssystem einen Roboterarm umfasst, durch den der Greifer betätigbar ist.

## Revendications

1. Système de manipulation de tube à essai comprenant un tube à essai pourvu d'au moins une paire de saillies ou d'évidements espacés l'un(e) de l'autre autour d'une paroi latérale du tube à essai ; et une pince comprenant une paire de doigts dont chacun définit une saillie ou un évidement formé(e) et dimensionné(e) pour recevoir l'un(e) des saillies ou des évidements sur le tube à essai.

2. Système de manipulation de tube à essai selon la revendication 1, dans lequel le tube à essai comprend la paire de saillies et la pince comprend la paire d'évidements.

3. Système de manipulation de tube à essai selon la revendication 1 ou 2, dans lequel les saillies sont diamétralement espacées les unes des autres.

4. Système de manipulation de tube à essai selon une quelconque revendication précédente, dans lequel les saillies sont allongées et s'étendent dans une direction majeure longitudinalement du tube à essai et dans une direction mineure circonférentiellement du tube à essai.

5. Système de manipulation de tube à essai selon une quelconque revendication précédente, dans lequel l'évidement dans chaque pince est formé et dimensionné pour s'adapter étroitement à la forme extérieure de la saillie dans au moins une des directions majeure et/ou mineure.

6. Système de manipulation de tube à essai selon une quelconque revendication précédente, dans lequel le tube à essai comprend une fermeture pouvant être fixée de manière amovible autour d'une embouchure du tube à essai.

7. Système de manipulation de tube à essai selon la revendication 6, dans lequel la fermeture peut être fixée par vissage autour de l'embouchure du tube à essai.

8. Système de manipulation de tube à essai selon la revendication 6 ou 7, dans lequel la fermeture est pourvue d'une deuxième paire de saillies espacées les unes des autres.

9. Système de manipulation de tube à essai selon la revendication 8, dans lequel le tube à essai comprend une troisième paire de saillies espacées les unes des autres sur la paroi latérale et espacées longitudinalement de la première paire de saillies.

10. Système de manipulation de tube à essai selon une quelconque revendication précédente, dans lequel le système de manipulation comprend un socle pour recevoir et retenir le tube à essai.

11. Système de manipulation de tube à essai selon la revendication 10, dans lequel le socle comprend un corps définissant un puits conçu pour permettre l'insertion longitudinale partielle du tube à essai tout en résistant au déplacement en rotation du tube à essai par rapport au socle.

12. Système de manipulation de tube à essai selon la revendication 11, dans lequel le puits comprend une paire de fentes diamétralement opposées et s'étendant radialement vers l'extérieur formées et dimensionnées pour recevoir la paire de saillies.

13. Système de manipulation de tube à essai selon une quelconque revendication précédente, dans lequel le système de manipulation comprend un bras robotique par lequel la pince peut être actionnée.
